# EUROPEAN PATENT APPLICATION

(11) **EP 1 598 891 A2**
(43) Date of publication of application: **23.11.2005**
(21) Application number: 05010743.2
(22) Date of filing: 18.05.2005
(51) Int. Cl.: H01M 8/10, H01M 4/86, H01M 4/88

(54) **Fuel cell**

(30) Priority: 20.05.2004 JP 2004150010
(71) Applicant: AISIN SEIKI KABUSHIKI KAISHA, Kariya-shi, Aichi-ken 448-8650 (JP)
(72) Inventor: Xie, Gang Int.Prop.Dept. Aisin Seiki K.K., Kariya-shi Aichi-ken, 448-8650 (JP); Ito, Naoki Aisin Engineering Co., Ltd., Aichi, 448-8605 (JP); Nezu, Shinji Imra Material R&D Co., Ltd., Kariya Aichi, 448-0021 (JP); Oyabe, Yosuke Imra Material R&D Co., Ltd., Kariya Aichi, 448-0021 (JP)
(74) Representative: TBK-Patent

(57) **Abstract**

A fuel cell (1) including a proton-conducting solid electrolyte membrane (2), an oxidant electrode (3) provided on one side of the solid electrolyte membrane, and a fuel electrode (4) provided on the other side of the solid electrolyte membrane characterized in that at least one of the oxidant electrode and the fuel electrode includes a polarizing means (7) for electrochemically polarizing at least one of the oxidant electrode and the fuel electrode for oxidizing, or reducing, a fuel, or an oxidant, passing through the solid electrolyte membrane.

## Description

### FIELD OF THE INVENTION

This invention generally relates to a fuel cell. More particularly, this invention pertains to a fuel cell including a proton-conducting solid electrolyte membrane.

### BACKGROUND

A fuel cell such as a polymer electrolyte fuel cell is expected to expand in the future as a power source for a vehicle or a stationary generator. A known polymer electrolyte fuel cell includes a proton-conducting solid electrolyte membrane, a fuel electrode provided on one side of the solid electrolyte membrane, and an oxidant electrode provided on the other side of the solid electrolyte membrane, In case of power generation, fuel such as hydrogen and methanol is supplied to the fuel electrode while oxidant gas is supplied to the oxidant electrode. Fuel is oxidized in the fuel electrode so as to generate proton and electron. Proton reaches a counter electrode, i.e. the oxidant electrode by passing through the solid electrolyte membrane. Electron reaches the oxidant electrode by passing through an external load, instead of the solid electrolyte membrane. Then, the proton and the electron that has reached the oxidant electrode generate water by reacting with oxygen supplied to the oxidant electrode. Accordingly, electrical energy is collected by such power generation reaction.

According to the known fuel cell, it is highly desirable that fuel (hydrogen) and oxidant (oxygen) supplied to the fuel cell do not permeate the inside of the solid electrolyte membrane. However, in practice, hydrogen or oxygen may pass through the solid electrolyte membrane and leaks to the respective counter electrodes. In this case, a fuel cell output may be decreased.

Further, in the event of hydrogen permeating a counter electrode, i.e. the oxidant electrode, from the fuel electrode, a reaction speed of hydrogen with oxygen for generating water decreases since in a case where an electrode potential of the oxidant electrode is high, a catalytic property of a platinum catalyst used for the oxidant electrode relative to hydrogen oxidation decreases. Therefore, a state occurs in which hydrogen and oxygen exist in the oxidant electrode. In this state, if the oxidant electrode potential is lowered, hydrogen and oxygen rapidly react with each other, thereby causing damage to the polymer electrolyte membrane.

Furthermore, a greater part of oxygen permeating a counter electrode, i.e. the fuel electrode, from the oxidant electrode becomes water by reacting with hydrogen in the fuel electrode. At this time, however, since an electrode potential of the fuel electrode is low, hydrogen peroxide is generated, a process which causes damage to the polymer electrolyte membrane.

Thus, a need exists for a fuel cell that can minimize decrease of a fuel cell output caused by fuel or oxidant leaking to respective counter electrodes by passing through a solid electrolyte membrane so that a life time of the fuel cell may be increased.

### SUMMARY OF THE INVENTION

1. According to an aspect of the present invention, a fuel cell including a proton-conducting solid electrolyte membrane, an oxidant electrode provided on one side of the solid electrolyte membrane, and a fuel electrode provided on the other side of the solid electrolyte membrane characterized further comprising a polarizing means (7) included in at least one of the oxidant electrode (3) and the fuel electrode (4), the polarizing means (7) when included in the oxidant electrode (3) being served for a polarization thereof in order to oxidize a fuel that comes thereto after passing through the solid electrolyte membrane (2), the polarizing means (7) when included in the fuel electrode (4) being served for a polarization thereof in order to reduce the oxidant that comes thereto after passing through the solid electrolyte membrane (2).

According to the aforementioned invention, fuel or oxidant is prevented from reaching the respective counter electrodes by passing through the solid electrolyte membrane, and mixing with each other (i.e. oxygen and hydrogen are mixed with each other) inside the respective counter electrodes. Therefore, decrease of the fuel cell output and lifetime thereof caused by leakage may be prevented.

### BRIEF DESCRIPTION OF THE DRAWINGS

The foregoing and additional features and characteristics of the present invention will become more apparent from the following detailed description considered with reference to the accompanying drawings, wherein:
Fig. 1 is a cross-sectional view of a membrane electrode assembly of a fuel cell in which a polarization system is provided on an oxidant electrode side according to an embodiment of the present invention;
Fig. 2 is a cross-sectional view of the membrane electrode assembly of the fuel cell in which conductors are provided according to the embodiment of the present invention;
Fig. 3 is a cross-sectional view of the membrane electrode assembly of the fuel cell in which the polarization system is provided on an fuel electrode side according the embodiment of the present invention;
Fig. 4 is a cross-sectional view of the membrane electrode assembly of the fuel cell in which conductors are provided according to the embodiment of the present invention;
Fig. 5 is a cross-sectional view of a sheet forming member according to the embodiment of the present invention; and
Fig. 6 is a cross-sectional view of the fuel cell equipped with a gas distribution plate according to the embodiment of the present invention.

### DETAILED DESCRIPTION

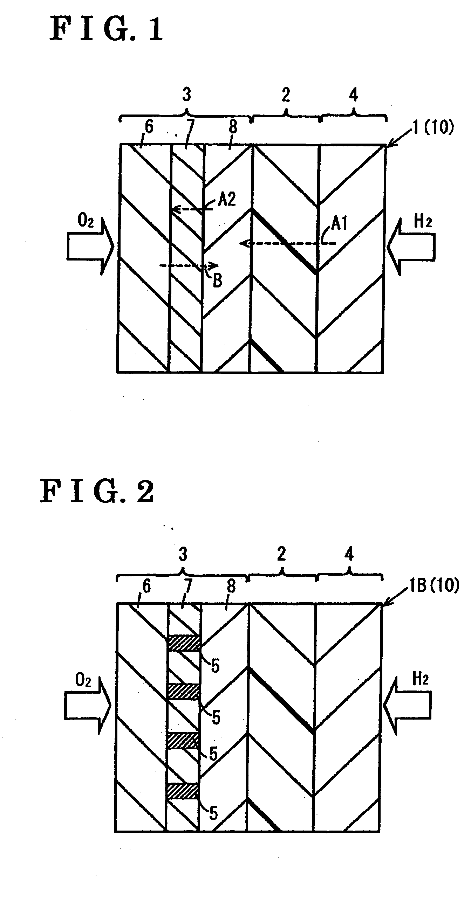

An embodiment of the present invention is explained with reference to the attached drawings. Fig. 1 is a representative schematic view of a fuel cell 1 according to the present embodiment. A membrane electrode assembly 10 of the fuel cell 1 includes a proton-conducting solid electrolyte membrane 2 formed by polymer material, an oxidant electrode 3 provided on one side of the solid electrolyte membrane 2 in a thickness direction thereof, and a fuel electrode 4 provided on the other side of the solid electrolyte membrane 2 in a thickness direction thereof. The fuel electrode 4 includes a catalyst layer facing the solid electrolyte membrane 2, and a porous gas diffusion layer through which fuel diffuses and passes. The catalyst layer is formed by a mixture of a catalyst having catalytic property, and a proton-conducting electrolyte component.

The oxidant electrode 3 includes a polarization system. The polarization system is preferably formed by a permeation resistance portion 7 having proton conductivity and electron conductivity, as well as permeation resistance to permeation of fuel or oxidant. The permeation resistance (i.e. a gas barrier ability) of the permeation resistance portion 7 is acquired by increasing density of electrode components, and by impregnating an inside of the electrode mainly with solid electrolyte components and/or conductive material. The proton conductivity of the permeation resistance portion 7 is acquired by impregnating an inside of the electrode mainly with solid electrolyte components. The electron conductivity is acquired by conductive fiber such as carbon fiber, or conductive material such as carbon black.

The oxidant electrode 3 includes therein the permeation resistance portion 7 as mentioned above. The oxidant electrode 3 basically includes a porous outer layer portion 6 having diffusive permeability for diffusing and permeating oxidant containing gas (i.e. oxygen containing gas, normally), a permeation resistance portion 7 having proton conductivity and electron conductivity, as well as resistance to permeation of oxidant containing gas (i.e. gas barrier ability), and an inner layer portion 8 including a catalyst having catalytic property. The outer layer portion 6 preferably includes catalyst so as to have catalytic property.

In case of power generation, oxidant (oxygen containing gas, normally) is supplied to the oxidant electrode 3 while fuel (hydrogen containing gas, normally) is supplied to the fuel electrode 4. Fuel is oxidized in the fuel electrode 4, thereby generating proton and electron. The proton reaches a counter electrode, i.e. the oxidant electrode 3, by passing through the solid electrolyte membrane 2. The electron reaches the oxidant electrode 3 by passing through an external load (not shown), instead of the solid electrolyte membrane 2, from the fuel electrode 4. The proton and electron that have reached the oxidant electrode 3 generate water by reacting with oxygen supplied to the oxidant electrode 3. Electrical energy is thus collected by such power generation reaction. Since excess hydrogen exists in the fuel electrode 4, an electrode potential thereof may be relatively low as is close to a value of an electrode potential of a hydrogen electrode.

A case is explained below in which fuel supplied to the fuel electrode 4 leaks from the fuel electrode 4 to the oxidant electrode 3 by passing through the solid electrolyte membrane 2 in the direction of an arrow A1 in Fig. 1. Since excess and rich oxidant containing gas is supplied to the outer layer portion 6 of the oxidant electrode 3, an electrode potential thereof is relatively high. At this time, the oxygen supplied to the outer layer portion 6 of the oxidant electrode 3 is limited, by means of the permeation resistance portion 7 having high gas barrier ability, to permeate the inner layer portion 8 in the direction of an arrow B in Fig. 1. Accordingly, it is considered that oxygen is not sufficient in the inner layer portion 8 of the oxidant electrode 3 while hydrogen is excessive which has leaked from the fuel electrode 4 to the oxidant electrode 3 side by passing through the solid electrolyte membrane 2. An electrode potential of the inner layer portion 8 of the oxidant electrode 3 may be relatively low as is close to a value of an electrode potential of hydrogen electrode.

That is, the electrode potential of the outer layer portion 6 of the oxidant electrode 3 is relatively higher than that of the inner layer portion 8 while the electrode potential of the inner layer portion 8 of the oxidant electrode 3 is relatively lower than that of the outer layer portion 6.

The permeation resistance portion 7 has electron conductivity as well as resistance (i.e. gas barrier ability) to permeation of gas such as oxidant containing gas. Thus, the permeation resistance portion 7 electrically connects the outer layer portion 6 having a relatively high potential with the inner layer portion 8 having a relatively low potential, which constitute the oxidant electrode 3, so that a closed circuit is formed.

The electrode potential of the inner layer portion 8 of the oxidant electrode 3 is electrochemically polarized in a positive direction relative to a resting potential of the inner layer portion 8 so that oxidization ability for oxidizing hydrogen may be enhanced. Hydrogen that has moved from the fuel electrode 4 to the inner layer portion 8 by passing through the solid electrolyte membrane 2 in the direction of the arrow A is oxidized to become protons (H⁺). That is, hydrogen gas that has leaked from the fuel electrode 4 by passing through the solid electrolyte membrane 2 exists in the oxidant electrode 3 as protons (H⁺), not as hydrogen gas.

In this case, protons (H⁺) generated by oxidation of hydrogen that have moved from the fuel electrode 4 to the oxidant electrode 3 by passing through the solid electrolyte membrane 2 is conducted in the permeation resistance portion 7 having proton conductivity towards the outer layer portion 6 in the direction of an arrow A2. The protons (H⁺) receive electrons and then generate water by reacting with oxygen supplied to the outer layer portion 6 of the oxidant electrode 3, by means of catalytic action provided in the oxidant electrode 3.

Accordingly, hydrogen leaking from the fuel electrode 4 to the oxidant electrode 3 by passing through the solid electrolyte membrane 2 and oxygen supplied to the outer layer portion 6 are prevented from being mixed each other. Since hydrogen and oxygen are prevented from being mixed with each other inside the fuel cell, occurrence of chemically activated species such as gas combustion, heat generation, hydrogen peroxide, and radical may be minimized. Thus, the solid electrolyte membrane is prevented from deteriorating and a lifetime of the fuel cell is increased.

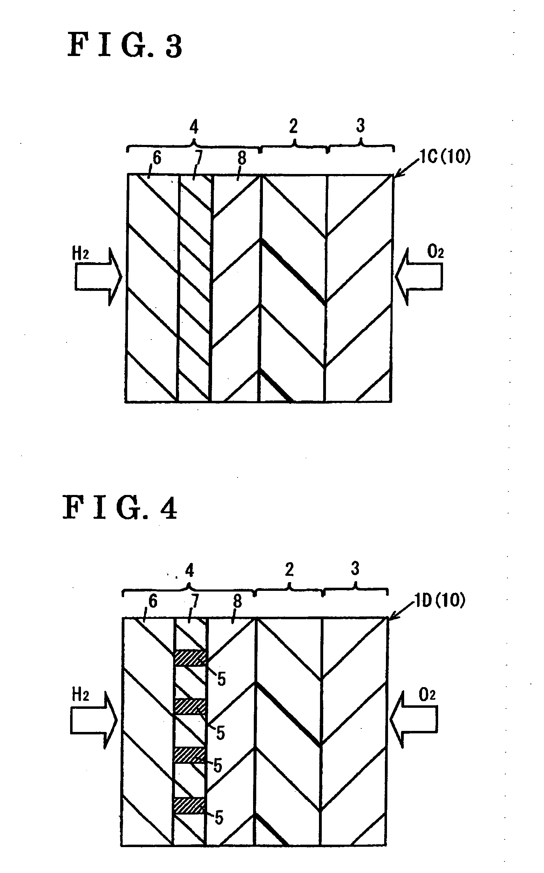

A fuel cell 1B according to the present embodiment shown in Fig. 2 has a same structure as that of the fuel cell 1 shown in Fig. 1. The fuel cell 1B includes a proton-conducting solid electrolyte membrane 2, an oxidant electrode 3 provided on one side of the solid electrolyte membrane 2 in a thickness direction thereof, and a fuel electrode 4 provided on the other side of the solid electrolyte membrane 2 in a thickness direction thereof. As shown in Fig. 2, the oxidant electrode 3 includes an outer layer portion 6 having diffusive permeability for diffusing and permeating oxidant containing gas, a permeation resistance portion 7 having proton conductivity and resistance to permeation of the oxidant gas, and an inner layer portion 8 provided between the solid electrolyte membrane 2 and the permeation resistance portion 7 and having catalytic property. According to the fuel cell 1B, conductors 5 having electron conductivity are partially provided inside the permeation resistance portion 7. That is, the permeation resistance portion 7 including the conductors 5 can configure the polarization system. The conductor 5 may be formed by conductive fiber such as carbon fiber, an assembly of conductive material such as carbon black, and the like.

Next, as shown in Fig. 3, a membrane electrode assembly 10 of a fuel cell 1C according to the present embodiment includes a proton-conducting solid electrolyte membrane 2, an oxidant electrode 3 provided on one side of the solid electrolyte membrane 2 in a thickness direction thereof, and a fuel electrode 4 provided on the other side of the solid electrolyte membrane 2 in a thickness direction thereof. In addition, the fuel electrode 4 includes an outer layer portion 6 having diffusive permeability of fuel, a permeation resistance portion 7 having proton conductivity, electron conductivity, and resistance (i.e. fuel barrier ability) to permeation of fuel, and an inner layer portion 8 provided between the solid electrolyte membrane 2 and the permeation resistance portion 7 and including catalyst having catalytic property.

In case of power generation, as shown in Fig. 3, oxidant containing gas (oxygen containing gas, normally) is supplied to the oxidant electrode 3 while fuel (hydrogen containing gas, normally) is supplied to the outer layer portion 6 of the fuel electrode 4. Fuel is oxidized in the fuel electrode 4, thereby generating proton and electron. The proton reaches a counter electrode, i.e. the oxidant electrode 3, by passing through the solid electrolyte membrane 2. The electron reaches the oxidant electrode 3 by passing through an external load (not shown), instead of the solid electrolyte membrane 2, from the fuel electrode 4. The proton and electron that have reached the oxidant electrode 3 generate water by reacting with oxygen supplied to the oxidant electrode 3. Electrical energy is thus collected by such power generation reaction.

A case is explained below in which oxidant gas supplied to the oxidant electrode 3 leaks from the oxidant electrode 3 to the inner layer portion 8 of the fuel electrode 4 by passing through the solid electrolyte membrane 2. Since excess and rich fuel (i.e. hydrogen) is supplied to the outer layer portion 6 of the fuel electrode 4, without the permeation resistance portion 7 serving as the polarization means, an electrode potential of the outer layer portion 6 is relatively low as is close to a value of an electrode potential of a hydrogen electrode. At this time, fuel (i.e. hydrogen) that has been supplied to the outer layer portion 6 of the fuel electrode 4 is limited, by means of the permeation resistance portion 7, to pass through the inner layer portion 8. Accordingly, it is considered that hydrogen is not sufficient in the inner layer portion 8 of the fuel electrode 4 while oxygen is excessive which has leaked from the oxidant electrode 3 to the fuel electrode 4 side by passing through the solid electrolyte membrane 2. An electrode potential of the inner layer portion 8 of the fuel electrode 4 may be relatively high. That is, in Fig. 3, the electrode potential of the outer layer portion 6 of the fuel electrode 4 is relatively lower than that of the inner layer portion 8 while the electrode potential of the inner layer portion 8 of the fuel electrode 4 is relatively higher than that of the outer layer portion 6.

The permeation resistance portion 7 has electron conductivity as well as proton conductivity and resistance (i.e. fuel barrier ability) to permeation of fuel. Thus, the permeation resistance portion 7 electrically connects the outer layer portion 6 having a relatively low potential with the inner layer portion 8 having a relatively high potential, which constitute the fuel electrode 4, so that a closed circuit is formed.

The electrode potential of the inner layer portion 8 of the fuel electrode 4 is electrochemically polarized in a negative direction relative to a resting potential of the inner layer portion 8 so that reduction ability for reducing excess oxygen may be enhanced. Thus, the reduction ability for reducing oxygen that has permeated from the oxidant electrode 3 into the inner layer portion 8 of the fuel electrode 4 via the solid electrolyte membrane 2 is enhanced. That is, oxygen leaking from the oxidant electrode 3 to the fuel electrode 4 by passing through the solid electrolyte membrane 2, and hydrogen supplied to the outer layer portion 6 of the fuel electrode 4 are prevented from being mixed with each other. Since oxygen and hydrogen are prevented from being mixed with each other inside the fuel cell, occurrence of chemically activated species such as gas combustion, heat generation, hydrogen peroxide, and radical may be minimized. Thus, the solid electrolyte membrane is prevented from deteriorating and a lifetime of the fuel cell is increased.

As shown in Fig. 4, a membrane electrode assembly 10 of a fuel cell 1D according to the present embodiment includes a fuel electrode 4 that includes an outer layer portion 6 having diffusive permeability of fuel, a permeation resistance portion 7 having proton conductivity and resistance to permeation of fuel, and an inner layer portion 8 provided between the solid electrolyte membrane 2 and the permeation resistance portion 7 and including catalyst having catalytic property. According to the fuel cell 1D, conductors 5 having electron conductivity are partially provided inside the permeation resistance portion 7. That is, the permeation resistance portion 7 including the conductors 5 can configure the polarization system.

The aforementioned polarization system is provided at least one of the oxidant electrode 3 and the fuel electrode 4. The polarization system is formed by the permeation resistance portion 7 having permeation resistance (i.e. bas barrier ability) to permeation of fuel or oxidant, as well as proton conductivity and electron conductivity. The permeation resistance portion 7 may be formed by arranging resistive material to permeation of fuel or oxidant at a vent hole portion of at least one of the oxidant electrode 3 and the fuel electrode 4. In this case, for example, proton-conducting electrolyte composition, catalyst such as platinum catalyst, or conductive material such as carbon black is used as the resistive material to permeation of fuel or oxidant. The vent hole portion of at least one of the oxidant electrode 3 and the fuel electrode 4 may be impregnated with aforementioned material. Alternatively, a permeation resistance portion 7 may be formed by a layer having resistance to permeation of fuel or oxidant that is sandwiched between the inner layer portion 8 and the outer layer portion 6.

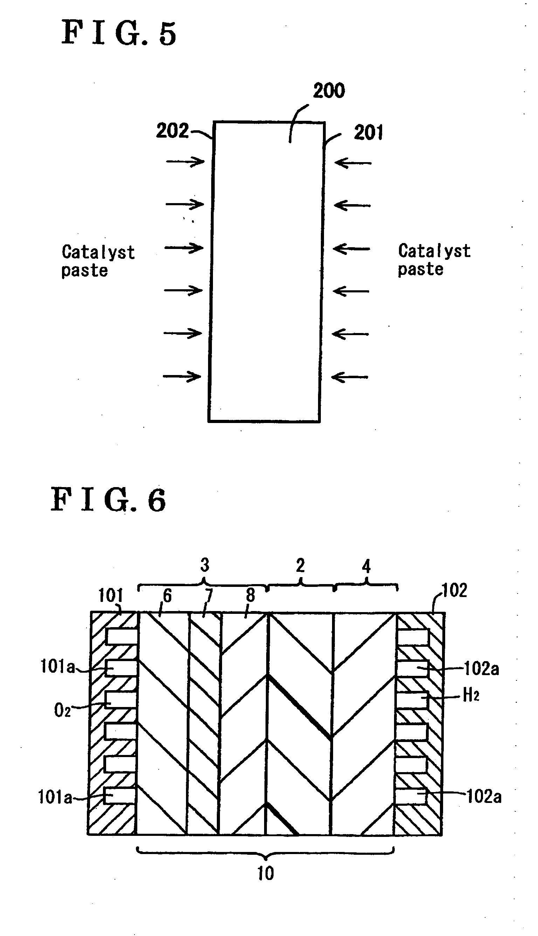

Next, the fuel cell 1 shown in Fig. 1 according to the present embodiment is explained below. A tetrafluoroethylene dispersion solution (20% by weight) was mixed with carbon black particle (VULCAN XC72R manufactured by Cabot Corporation) and a small amount of surface-active agent, and sufficiently stirred to combine to thereby obtain a mixture. Then, in order to evaporate excess water, the mixture was heated and dried so that granular carbon material with fluorocarbon resin (i.e. conductive material with fluorocarbon resin) was formed. An assembly of thus-manufactured carbon material with fluorocarbon resin was sufficiently mixed up to form a sheet (thickness: approximately 50µm). This sheet was temporally burned for 2 hours at 150 °C. Then, the sheet was burned for approximately 1 hour at a temperature equal to or greater than 360°C (precisely, between 360° C and 390°C) so as to produce a sheet forming member 200 consisting of water-repellent carbon material (see Fig. 5). The sheet forming member 200 includes a vent hole portion.

Further, a platinum catalyst as a catalyst (HISPEC 4000 manufactured by Johnson Matthey PLC) and a polymer solid electrolyte solution (SS1100 manufactured by Asahi Kasei) including proton-conducting electrolyte component were mixed to a predetermined volume ratio so that a catalyst paste was prepared. The catalyst paste was spread on a first side face 201 and a second side face 202 of the sheet forming member 200 respectively so that both side faces 201 and 202 were impregnated with the catalyst paste, and then the sheet forming member 200 was dried. Afterwards, the sheet forming member 200 was vacuum-dried at 80°C for a predetermined time period (precisely, 5 hours or more). The thus-produced sheet forming member 200 was impregnated with the electrolyte component and catalyst. Therefore, the sheet forming member 200 has proton conductivity and electron conductivity as well as gas barrier ability (gas permeation resistance). The sheet forming member 200 forms the permeation resistance portion 7 and the inner layer portion 8 shown in Fig. 1.

Accordingly, the permeation resistance portion 7 is formed by impregnating the vent hole portion of the oxidant electrode 3 with resistive material to permeation of oxidant (i.e. catalyst paste mainly composed of catalyst and polymer solid electrolyte solution).

A piece of a predetermined size (i.e. approximately 10cm²) was cut out from the sheet forming member 200. One side face of the cutout piece was impregnated with a tetrafluoroethylene dispersion solution (equivalent to the one mentioned above). The cutout piece configures the permeation resistance portion 7 and the inner layer portion 8 shown in Fig. 1.

A commercially available fluorocarbon electrolyte membrane (thickness: 30µm, size: approximately 7cm²) was arranged next to the other side face of the cutout piece as the solid electrolyte membrane 2.

Further, a carbon paper power collecting member (carbon paper manufactured by TORAY, thickness: 180µm, size: 10cm²), which had been burnt so as to have water-repellent quality, was arranged on one side face of the cutout piece as the porous outer layer portion 6 having gas diffusive permeability.

Furthermore, the catalyst paste, which was mainly composed of polymer solid electrolyte solution including proton-conducting electrolyte component and platinum catalyst, and produced in an aforementioned manner, was applied on the porous carbon paper power collecting member having gas permeability, which was also produced in an aforementioned manner. The carbon paper power collecting member with the catalyst paste was then dried so that the fuel electrode 4 shown in Fig. 1 was formed. The fuel electrode 4 includes a catalyst layer facing the solid electrolyte membrane 2 and a gas diffusion layer provided in a position not facing the solid electrolyte membrane 2. The fuel electrode 4 was arranged on a face of the solid electrolyte membrane 2 opposite to the face where the cutout piece was arranged, thereby forming a lamination. The lamination is formed by the solid electrolyte membrane 2, the oxidant electrode 3, and the fuel electrode 4, both of which sandwich the solid electrolyte membrane 2 therebetween. The lamination was pressed by means of a hot-press machine at 160°C and 7.85Mpa for approximately 90 seconds, thereby obtaining a membrane electrode assembly 10 (see Figs. 1 and 6).

Minimum features that the outer layer portion 6, the permeation resistance portion 7, and the inner layer portion 8 constituting the oxidant electrode 3 obtain are explained below. The inner layer portion 8 includes a catalyst having catalytic property for changing hydrogen to proton, the hydrogen being leaked from the fuel electrode 4 by passing through the solid electrolyte membrane 2. Further, the inner layer portion 8 includes proton conductivity for conducting the proton to move towards the permeation resistance portion 7. The permeation resistance portion 7 is not expected to have gas diffusion ability but has gas permeation resistance (gas barrier ability). The permeation resistance portion 7 has proton conductivity as well as electron conductivity for electrically connecting the inner layer portion 8 and the outer layer portion 6. The outer layer portion 6 is of porous formed by an assembly of carbon fiber and having gas diffusive permeability for permeating oxygen gas.

As shown in Fig. 6, with the use of a metallic gas distribution plate 101 for oxidation that has gas supply/exhaust function, a power collection function, and a gas barrier ability, and a metallic gas distribution plate 102 for fuel, an experimental fuel cell is configured by sandwiching the membrane electrode assembly 10 between the gas distribution plates 101 and 102. The gas distribution plate 101 includes a passage 101a for oxidant while the gas distribution plate 102 includes a passage 102a for fuel. In case of power generation, air is supplied to the outer layer portion 6 of the oxidant electrode 3 of the fuel cell to thereby constitute a cathode (oxidant electrode), while hydrogen gas as fuel is supplied to the fuel electrode 4 to thereby constitute an anode (fuel electrode).

In a state of open circuit voltage with no external load added, a gas chromatograph analyzer was connected to a gas exhaust port of the cathode of the fuel cell for analyzing a concentration of hydrogen gas leaking from the anode to the cathode through the membrane electrode assembly 10. Hydrogen and air, humidified by means of a gas bubbler filled with pure water at 80°C, were respectively supplied at a rate of 200 ml per minute to the experimental fuel cell that was thermally maintained at 80 °C. As a result, an amount of hydrogen gas leaking to the oxidant electrode 3 side was below a detection limit value. At this time, the open circuit voltage of the fuel cell was 0.92V.

For purposes of comparison, in a state of open circuit voltage with no external load added, a gas chromatograph analyzer was connected to a gas exhaust port of the cathode of a fuel cell for comparison (herein after called "comparison fuel cell"). This comparison fuel cell was basically same as the fuel cell shown in Fig. 6, however, the permeation resistance portion 7 was not provided. An electrode size of the comparison fuel cell was 10cm² that is same as the present embodiment. According to the comparison fuel cell, in the same way as the present embodiment, the hydrogen and air, humidified with a gas bubbler filled with pure water at 80°C, were respectively supplied at a rate of 200 ml per minute to the comparison fuel cell that was thermally maintained at 80 °C. As a result, an amount of hydrogen gas leaking to the oxidant electrode 3 side was approximately 350ppm, which was greater than that obtained by the present embodiment. At this time, the open circuit voltage of the fuel cell was approximately 1V. Air and hydrogen gas were both at normal pressure in the present embodiment and the comparison example.

According to the aforementioned embodiment, air as oxidant gas permeates diffusively through the outer layer portion 6 of the oxidant electrode 3. Thus, excess oxygen exists in the outer layer portion 6 and at the same time the electrode potential thereof may be high. However, due to the permeation resistance portion 7 having gas barrier ability (gas permeation resistance), air supplied to the outer layer portion 6 is limited to pass through the inner layer portion 8 from the outer layer portion 6. Then, in the oxidant electrode 3, oxygen is prevented from permeating and reaching at a catalyst arranged in the vicinity of an interface between the inner layer portion 8 and the solid electrolyte membrane 2. Meanwhile, hydrogen that has permeated the solid electrolyte membrane 2 from the fuel electrode 4 to the inter layer potion 8 side is excessive. Thus, the electrode potential of the inner layer portion 8 of the oxidant electrode 3 is close to the electrode potential of the hydrogen electrode, i.e. becomes low.

The permeation resistance portion 7 has electron conductivity and proton conductivity as well as gas permeability resistance. Therefore, the inner layer portion 8 having a low electrode potential and the outer layer portion 6 having a high electrode potential are electrically connected to each other by means of the permeation resistance portion 7, thereby forming the electrically closed circuit. As a result, the electrode potential of the inner layer portion 8 of the oxidant electrode 3 is electrochemically polarized in a positive direction relative to a resting potential. The ability for oxidizing hydrogen is enhanced. Thus, hydrogen gas that has reached the inner layer portion 8 by passing through the solid electrolyte membrane 2 is oxidized as proton. Proton is conducted through the permeation resistance portion 7 having proton conductivity, and further through the catalyst on the outer layer portion 6 side arranged opposite to the inner layer portion 8, thereby generating water by reducing oxygen in the outer layer portion 6.

According to the aforementioned reaction, a detection amount of leaked hydrogen gas that has passed through the solid electrolyte membrane 2 may be reduced. In this case, the open circuit voltage is approximately 1V according to a fuel cell not provided with the permeation resistance portion 7. On the other hand, according to the fuel cell of the present embodiment, the open circuit voltage is reduced to approximately 0.90V. This is because the electrode potential of the outer layer portion 6 of the oxidant electrode 3 is decreased due to the polarization reaction caused by the electrical conductivity between the inner layer portion 8 and the outer layer portion 6.

According to the aforementioned embodiment, hydrogen gas is used as fuel. However, hydrogen containing gas or methanol may be used instead.

The fuel cell of the present embodiment may be used for a vehicle, a stationary-use, a house, industrial equipment, electrical equipment, electronic equipment, and the like.

A fuel cell (1) including a proton-conducting solid electrolyte membrane (2), an oxidant electrode (3) provided on one side of the solid electrolyte membrane, and a fuel electrode (4) provided on the other side of the solid electrolyte membrane characterized in that at least one of the oxidant electrode and the fuel electrode includes a polarizing means (7) for electrochemically polarizing at least one of the oxidant electrode and the fuel electrode for oxidizing, or reducing, a fuel, or an oxidant, passing through the solid electrolyte membrane.

## Claims

1. A fuel cell (1) comprising a proton-conducting solid electrolyte membrane (2), an oxidant electrode (3) provided on one side of the solid electrolyte membrane, and a fuel electrode (4) provided on the other side of the solid electrolyte membrane **characterized** further comprising a polarizing means (7) included in at least one of the oxidant electrode (3) and the fuel electrode (4), the polarizing means (7) when included in the oxidant electrode (3) being served for a polarization thereof in order to oxidize a fuel that comes thereto after passing through the solid electrolyte membrane (2), the polarizing means (7) when included in the fuel electrode (4) being served for a polarization thereof in order to reduce the oxidant that comes thereto after passing through the solid electrolyte membrane (2).

2. A fuel cell according to claim 1, wherein the polarizing means is formed to include a permeation resistance portion having a proton conductive ability, an electron conductive ability, and a permeation resistive ability, the permeation resistive ability being against the fuel and the oxidant when the polarizing means is provided in the oxidant electrode and the fuel electrode, respectively.

3. A fuel cell according to claim 2, wherein the permeation resistance portion, when provided in the oxidant electrode and the fuel electrode, is formed by providing a material that is resistive to the fuel and the oxidant in a vent hole portion of the oxidant electrode and the fuel electrode, respectively.

4. A fuel cell according to claim 2 further comprising an outer layer portion and an inner layer portion, the inner layer being of catalyst activity and being provided between the solid electrolyte membrane and the permeation resistance, the outer layer portion being of diffusion abilities of the oxidant and the fuel when the y of when the polarizing means is provided in the oxidant electrode and the fuel electrode, respectively.

5. A fuel cell according to claim 2, wherein the electron conductivity is obtained by providing a conducting means having electron conductivity inside the permeation resistance portion.

6. A fuel cell according to claim 5, wherein the conducting means is a plurality of conductors partially arranged and dispersed inside the permeation resistance portion.

7. A fuel cell according to claim 6, wherein the conductor is conductive fibers.

8. A fuel cell according to claim 7, wherein the conductive fibers are carbon made.

9. A fuel cell according to claim 6, wherein the conductor is an assembly of conductive material.

10. A fuel cell according to claim 9, wherein the conductive material is carbon black.
